# EUROPEAN PATENT APPLICATION

(11) **EP 4 679 293 A1**
(43) Date of publication of application: **14.01.2026**
(21) Application number: 24766528.4
(22) Date of filing: 08.03.2024
(51) Int. Cl.: G06F 16/953, H04N 21/431, G06Q 50/00, G06F 9/451

(54) **CONTENT SHARING METHOD AND APPARATUS, DEVICE, COMPUTER READABLE STORAGE MEDIUM, AND PRODUCT**

(30) Priority: 09.03.2023 CN 202310248755
(71) Applicant: Beijing Zitiao Network Technology Co., Ltd., Beijing 100190 (CN)
(72) Inventor: WANG, Ruifeng, Beijing 100028 (CN); LU, Jing, Beijing 100028 (CN); WANG, Xinjuan, Beijing 100028 (CN); LIU, Siyi, Beijing 100028 (CN); DUAN, Yunshan, Beijing 100028 (CN)
(74) Representative: Isarpatent
(86) International application number: PCT/CN2024/080746
(87) International publication number: WO 2024/183814

(57) **Abstract**

Embodiments of the present disclosure provide a content sharing method and apparatus, a device, a computer readable storage medium, and a product. The method comprises: in a media content display page, displaying at least one piece of interactive content associated with the currently displayed first media content, wherein the interactive content is published by a first user and/or a second user; in response to a sharing operation triggered by the first user for at least one piece of target interactive content, generating second media content according to the at least one piece of target interactive content and/or associated interactive content, wherein the target interactive content comprises at least one piece of target media content, and/or the associated interactive content comprises at least one piece of interactive content associated with the target interactive content; and publishing the second media content.

## Description

The present application is based on and claims the priority to the Chinese application No. 202310248755.2 filed on March 9, 2023, the disclosure of which is incorporated by reference herein in its entirety.

### TECHNICAL FIELD

The present application relates to the technical field of interface interaction, and in particular, to a content sharing method and apparatus, a device, a computer readable storage medium, and a product.

### BACKGROUND

When a user browses media content on the Internet, interactive content related to the media content can also be viewed. For example, a user may click on a Comment control to view comment information for currently browsed media content.

### SUMMARY

Embodiments of the present disclosure provide a content sharing method and apparatus, a device, a computer readable storage medium, and a product.

In a first aspect, an embodiment of the present disclosure provides a content sharing method applied to a client of a first user, comprising:
displaying at least one interactive content associated with currently presented first media content in a media content presentation page, wherein, the interactive content is posted by the first user and/or a second user;
in response to a sharing operation triggered by the first user for at least one target interactive content, generating second media content according to the at least one target interactive content and/or associated interactive content, wherein, the target interactive content comprises at least one target media content and/or the associated interactive content comprises at least one interactive content associated with the target interactive content; and
posting the second media content.

In a second aspect, an embodiment of the present disclosure provides a content sharing method applied to a client of a second user, comprising:
presenting a preset media content stream in a media content presentation page;
presenting second media content posted by a first user in the media content presentation page;
wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

In a third aspect, an embodiment of the present disclosure provides a content sharing apparatus, applied to a client of a first user, comprising:
a display module configured to, display at least one interactive content associated with currently presented first media content in a media content presentation page, wherein, the interactive content is posted by the first user and/or a second user;
a determining module configured to, in response to a sharing operation triggered by the first user for at least one target interactive content, generate second media content according to the at least one target interactive content and/or associated interactive content, wherein, the target interactive content comprises at least one target media content and/or the associated interactive content comprises at least one interactive content associated with the target interactive content; and
a posting module configured to, post the second media content.

In a fourth aspect, an embodiment of the present disclosure provides a content sharing apparatus, applied to a client of a second user, comprising:
a presenting module configured to, present a preset media content stream in a media content presentation page;
a processing module configured to, in response to a switching operation triggered by the second user in the media content presentation page, present second media content posted by a first user in the media content presentation page;
wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

In a fifth aspect, an embodiment of the present disclosure provides an electronic device, comprising: a processor and a memory;
the memory storing computer executable instructions;
the processor executing the computer executable instructions stored by the memory, to cause the at least one processor to perform the content sharing method as described in the first aspect and various possible designs of the first aspect or the second aspect and various possible designs of the second aspect.

In a sixth aspect, an embodiment of the present disclosure provides a computer readable storage medium having stored thereon computer executable instructions which, when executed by a processor, implement the content sharing method as described in the first aspect and various possible designs of the first aspect or the second aspect and various possible designs of the second aspect.

In a seventh aspect, an embodiment of the present disclosure provides a computer program product, comprising a computer program which, when executed by a processor, implements the content sharing method as described in the first aspect and various possible designs of the first aspect or the second aspect and various possible designs of the second aspect.

According to the content sharing method and apparatus, device, computer readable storage medium and product provided by the embodiments, by displaying at least one interactive content associated with currently presented first media content in a media content presentation page, based on a sharing operation triggered by a first user for at least one target interactive content, second media content comprising at least one target media content corresponding to the target interactive content can be generated according to the at least one target interactive content.

### BRIEF DESCRIPTION OF THE DRAWINGS

In order to more clearly illustrate the embodiments of the present application or technical solutions in the prior art, the drawings to be used in the description of the embodiments or the prior art will be briefly described below, and it is obvious that the drawings in the following description are only some embodiments of the present disclosure, and for those skilled in the art, other drawings can be obtained according to these drawings without paying creative labor.
Fig. 1 is a schematic flowchart of a content sharing method according to an embodiment of the present disclosure;
Fig. 2 is a schematic diagram of an interface interaction according to an embodiment of the present disclosure;
Fig. 3 is a schematic diagram of yet another interface interaction according to an embodiment of the present disclosure;
Fig. 4 is a schematic diagram of yet another interface interaction according to an embodiment of the present disclosure;
Fig. 5 is a schematic diagram of a display interface according to an embodiment of the present disclosure;
Fig. 6 is a schematic diagram of yet another interface interaction according to an embodiment of the present disclosure;
Fig. 7 is a schematic flowchart of a content sharing method according to an embodiment of the present disclosure;
Fig. 8 is a schematic diagram of an interface interaction according to an embodiment of the present disclosure;
Fig. 9 is a schematic diagram of an interface interaction according to an embodiment of the present disclosure;
Fig. 10 is a schematic structural diagram of a content sharing apparatus according to an embodiment of the present disclosure;
Fig. 11 is a schematic structural diagram of a content sharing apparatus according to an embodiment of the present disclosure;
Fig. 12 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below in conjunction with the drawings in the embodiments of the present disclosure, and it is obvious that the described embodiments are only some of the embodiments of the present disclosure, rather than all of the embodiments. All other embodiments, which are obtained by one of ordinary skill in the art without making creative labor based on the embodiments in the present disclosure, fall within the scope of protection of the present disclosure.

In order to solve the technical problem that interactive content based on media content has a single interaction mode, the present disclosure provides a content sharing method and apparatus, a device, a computer readable storage medium and a product.

It should be noted that the content sharing method and apparatus, device, computer readable storage medium and product provided by the present disclosure may be applied to any interactive scenario of interactive content based on media content.

When a user browses media content, generally, only interactive operations such as like, comment can be performed on interactive content associated with the media content. Often, the interaction mode is single, resulting in poor user experience.

In order to enrich the interaction mode based on the interactive content, media content can be generated based on interactive content selected by the user and image media content associated with the interactive content, and posted, thereby enriching the interaction mode of the interactive content based on the media content, and improving user experience. In some embodiments, in response to a sharing operation triggered by a user for at least one target interactive content, second media content may be generated according to the at least one target interactive content, and the second media content may be posted. The target interactive content comprises at least one target media content.

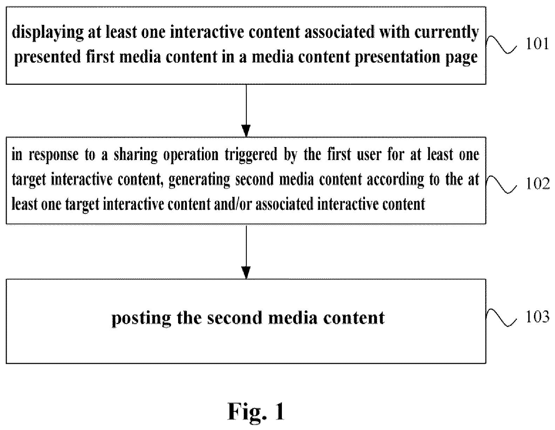

Fig. 1 is a schematic flowchart of a content sharing method, applied to a client of a first user, according to an embodiment of the present disclosure, as shown in Fig. 1, comprising:
step 101, displaying at least one interactive content associated with currently presented first media content in a media content presentation page, wherein, the interactive content is posted by the first user and/or a second user.

The execution subject of the embodiment is a content sharing apparatus, and the content sharing apparatus may be coupled to a client of a first user. Therefore, a content sharing operation based on the interactive content can be carried out based on a triggering operation of the user on the client. In some embodiments, the content sharing apparatus may also be coupled to a server in communication connection with a terminal device installed with a client of a first user, so as to control the terminal device to perform content sharing operation based on the interactive content according to a triggering operation of the user on the terminal device.

In this embodiment, in order to enrich the interaction mode based on the interactive content, the first user may generate media content based on the interactive content and post the media content, so as to implement the sharing operation of the interactive content. For example, the media content may be associated with one or more pieces of comment information posted by the user, and the comment information may include one or more comment images. It is to be understood that the comment image may include a picture and/or video, etc. The user can select at least one piece of comment information, generate media content to be shared based on the at least one piece of comment information and comment images associated therewith, and post the media content to be shared.

In some embodiments, to implement an interactive operation based on interactive content, at least one interactive content associated with currently presented first media content may be displayed in the media content presentation page. The media content presentation page is used for presenting a media content stream. The media content stream may include first media content, and media content in the media content stream may be video media content, audio media content, image-text media content, and the like, which is not limited in the present disclosure.

In some embodiments, the first media content may be associated with at least one interactive content, which may be posted by the first user and/or posted by a second user. The second user may be a user browsing the first media content, or the second user may also be a user posting the first media content.

Step 102, in response to a sharing operation triggered by the first user for at least one target interactive content, generating second media content according to the at least one target interactive content and/or associated interactive content, wherein, the target interactive content comprises at least one target media content and/or the associated interactive content comprises at least one interactive content associated with the target interactive content.

In this embodiment, the first user may perform a selecting operation on at least one interactive content, to determine at least one target interactive content and/or associated interactive content. In response to a sharing operation triggered by the first user for the at least one target interactive content and/or associated interactive content, second media content can be generated according to the at least one target interactive content and/or associated interactive content.

It should be noted that the target interactive content may include interactive information and/or at least one target media content. The target media content may include at least one of image media content, video media content or audio media content associated with the interactive information.

Therefore, the second media content generated based on the at least one target interactive content may include at least one target media content in the at least one target interactive content, thereby enriching the display content in the second media content.

The associated interactive content may be interactive content associated with the target interactive content. For example, the associated interactive content may be upper-level comment content of the target interactive content, or the associated interactive content may be lower-level comment content of the target interactive content. The associated interactive content may also include media content. For example, the associated interactive content may be lower-level comment content of the target comment content, and the associated interactive content may include image media content.

Step 103, posting the second media content.

In this embodiment, in generating the second media content, the second media content may be posted in response to a posting operation triggered by the first user.

In some embodiments, the first user may also set browsing rights for the second media content, where the browsing rights may include a browsable time limit and a browsable user group. For example, the second media content may be media content visible to all people, or, the second media content may be media content visible to a specified friend, or, the second media content may be media content browsable within a specified time range, or the like.

In some embodiments, the target media content includes image media content in the target interactive content.

As an implementation, the target media content may be image media content in the target interactive content, or, the target media content may be video media content in the target interactive content, or the like.

Further, on the basis of any of the above embodiments, the media content presentation page is provided with an Interact control. The step 101 comprises:
presenting the first media content in the media content presentation page; and
in response to a triggering operation of the first user for the Interact control, displaying the at least one interactive content associated with the first media content.

In this embodiment, the first media content may be presented in the media content presentation page. The first media content may be video media content, audio media content, image-text media content, etc.

In some embodiments, the media content presentation page may be preset with an Interact control. In response to a triggering operation of the first user for the Interact control, the at least one interactive content associated with the first media content is displayed.

For example, the first media content may be video media content. The media content presentation page can be preset with a Comment control. In response to a triggering operation of the first user for the Comment control, at least one piece of comment information related to the video media content can be displayed.

According to the content sharing method provided by the embodiment, by displaying at least one interactive content associated with currently presented first media content in the media content presentation page, based on a sharing operation triggered by the first user for at least one target interactive content, second media content including at least one target media content corresponding to the target interactive content can be generated according to the at least one target interactive content. The interaction mode of the interactive content based on the media content is enriched, the display content in the second media content is enriched, and the user experience is improved.

In some embodiments, on the basis of any of the above embodiments, the step 102 comprises:
generating the second media content based on the at least one target interactive content and at least one associated interactive content associated with the at least one target interactive content.

In this embodiment, the target interactive content may be associated with other interactive content. For example, the first user and/or the second user may view first comment information associated with the media content, and post second comment information based on comment information posted by other users. The second comment information is comment information associated with the first comment information.

In order to enrich the display content in the second media content, if the target interactive content is associated with at least one associated interactive content, the second media content may be generated based on the target interactive content and at least one associated interactive content associated with the target interactive content.

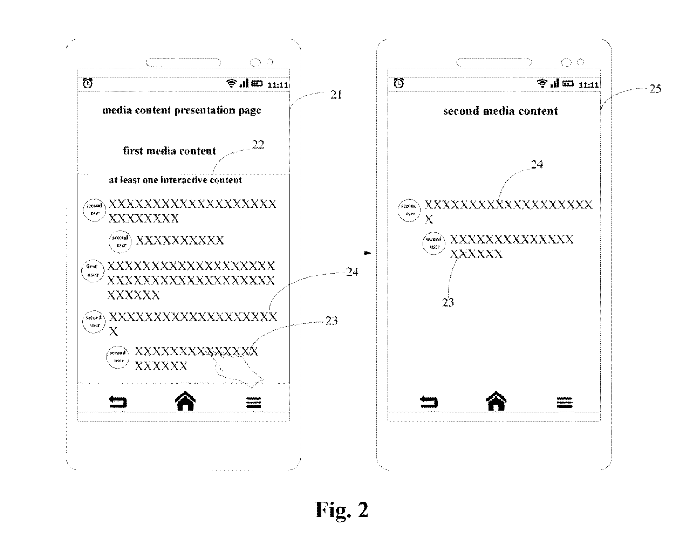

Fig. 2 is a schematic diagram of an interface interaction according to an embodiment of the present disclosure, and as shown in Fig. 2, at least one interactive content 22 associated with first media content may be presented in a media content presentation page 21. Target interactive content 23 currently selected by the first user comprises associated interactive content 24. In response to a sharing operation triggered by the first user based on the target interactive content 23, second media content 25 may be generated according to the target interactive content 23, wherein, the second media content 25 includes the target interactive content 23 and the associated interactive content 24 corresponding to the target interactive content 23.

In some embodiments, after the first user selects a target interactive content, contextual interactive content associated with the target interactive content may also be included in the second media content. For example, when a target interactive content selected by the first user is a second-level comment content, when generating the second media content, an upper-level comment (i.e., a corresponding first-level comment) of the second-level comment may be automatically included in the second media content, or one or more reply comments that reply to the comment information may be included in the second media content. It will be appreciated that, the first user may choose to add or delete other associated interactive content when editing the second media content.

According to the content sharing method provided by the embodiment, by generating the second media content based on the at least one target interactive content and at least one interactive content associated with the at least one target interactive content, the display content in the second media content can be enriched, and the interaction mode based on the interactive content is enriched.

In some embodiments, on the basis of any of the above embodiments, the step 102 comprises:
in response to a first triggering operation of the first user for any target interactive content, displaying a function list associated with the target interactive content, wherein, the function list comprises a first Share control; and
in response to a triggering operation of the first user for the first Share control, generating the second media content according to target interactive content selected by the user.

In this embodiment, the first user may perform a browsing operation on the interactive content, and perform a first triggering operation on any target interactive content according to an actual requirement. The first triggering operation may be a long press, a double click, a drag, and the like of the target interactive content.

In response to a first triggering operation triggered by the first user, a function list associated with the target interactive content can be displayed. The function list may include a triggering operation associated with the target interactive content. For example, the function list may include a first Share control.

In response to a triggering operation of the first user for the first Share control, the second media content may be generated according to target interactive content selected by the user. The target interactive content may comprise at least one target media content.

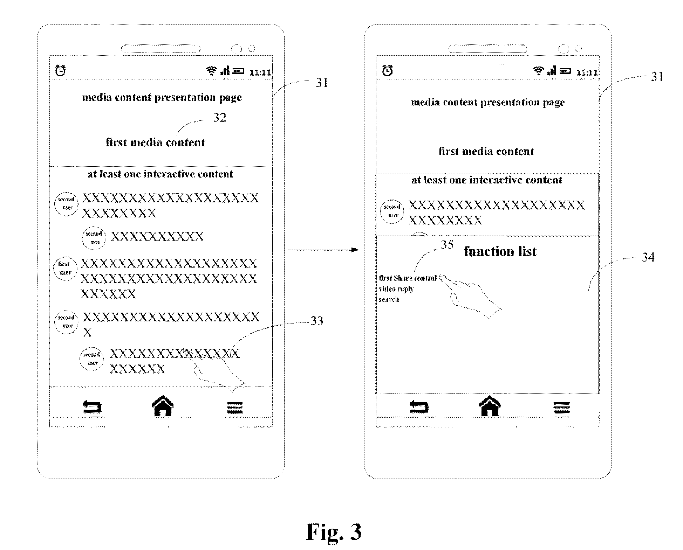

Fig. 3 is a schematic diagram of yet another interface interaction according to an embodiment of the present disclosure, and as shown in Fig. 3, at least one interactive content 33 associated with the first media content 32 may be presented in the media content presentation page 31. In response to a triggering operation of the first user for any target interactive contents 33, a function list 34 associated with the target interactive content 33 may be displayed. The function list 34 includes a first Share control 35. The first user may generate the second media content based on the first Share control 35.

According to the content sharing method provided by the embodiment, by in response to a first triggering operation of the first user for any target interactive content, displaying a function list associated with the target interactive content, the first user can generate second media content based on at least one target interactive content through a triggering operation on a first Share control in the function list, achieving the sharing of the target interactive content. Interaction modes based on the interactive content are enriched, and user experience is improved.

In some embodiments, on the basis of any of the above embodiments, the step 102 comprises:
in response to a second triggering operation of the first user for any interactive content, switching a display state of at least one candidate interactive content associated with the first media content into a selectable state;
in response to a selecting operation triggered by the first user for the at least one candidate interactive content, determining at least one target interactive content and/or associated interactive content selected by the first user;
displaying a preset second Share control; and
in response to the triggering operation of the first user for the second Share control, generating the second media content according to the at least one target interactive content and/or associated interactive content.

In this embodiment, in response to a second triggering operation of the first user for any interactive content, a display state of at least one candidate interactive content associated with the first media content may be switched to a selectable state. In the selectable state, a Select control may be displayed at a display position associated with each candidate interactive content, so that the first user can perform a selecting operation of the target interactive content based on the Select control. The second triggering operation includes, but is not limited to, a single click, a double click, a long press, a drag, and the like.

Further, after the display state of the at least one candidate interactive content associated with the first media content is switched to a selectable state, in response to a selecting operation triggered by the first user for the at least one candidate interactive content, the at least one candidate interactive content selected by the first user can be determined as the at least one target interactive content and/or associated interactive content.

In addition, a second Share control may be displayed, where the second Share control may be displayed after the display state of the at least one candidate interactive content associated with the first media content is switched to a selectable state, or, the second Share control may be displayed after the first user completes the selecting operation on the at least one target interactive content, or, the second Share control may be displayed in a page normally, which is not limited by the present disclosure.

After the at least one target interactive content and/or associated interactive content is determined, in response to a triggering operation of the first user for the second Share control, the second media content is generated according to the at least one target interactive content and/or associated interactive content.

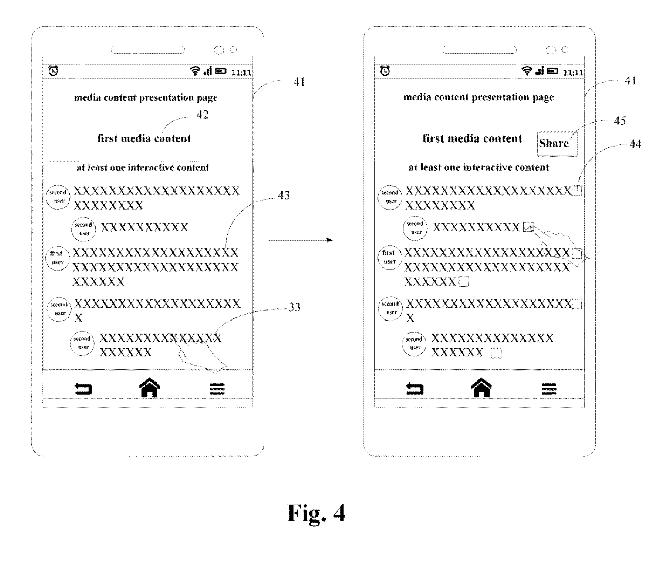

Fig. 4 is a schematic diagram of yet another interface interaction according to an embodiment of the present disclosure, and as shown in Fig. 4, at least one interactive content 43 associated with first media content 42 may be presented in a media content presentation page 41. In response to a second triggering operation of the first user on any interactive content 43, a display state of the at least one candidate interactive content 43 associated with the first media content 42 is switched into a selectable state. In the selectable state, a display position associated with the candidate interactive content 43 can be displayed with a checkbox 44. In response to a selecting operation triggered by the first user for at least one candidate interactive content 43, at least one target interactive content selected by the first user is determined. A preset second Share control 45 is displayed. In response to a triggering operation of the first user on the second Share control 45, second media content is generated according to the at least one target interactive content 43.

As an implementation, in response to a second triggering operation of the first user for any interactive content, a function list may be displayed, where the function list includes a second Share control. In response to a triggering operation of the first user for the Share control, a display state of at least one candidate interactive content associated with the first media content can be switched to a selectable state, so that the first user can realize the selecting operation of at least one target interactive content and/or associated interactive content in the selectable state. After determining the at least one target interactive content and/or associated interactive content, second media content may be generated based on the at least one target interactive content and/or associated interactive content.

According to the content sharing method provided by this embodiment, by in response to a second triggering operation of the first user for any interactive content, switching the display state of at least one candidate interactive content associated with the first media content to a selectable state, the first user can select one or more target interactive content and/or associated interactive content based on the selectable state, thereby implementing a sharing operation on the one or more target interactive content and/or associated interactive content, further enriching the interaction mode based on the interactive content.

In some embodiments, on the basis of any of the above embodiments, a preset third Share control is included in a display area associated with each interactive content. The step 102 comprises:
in response to a triggering operation of the first user for the third Share control associated with at least one target interactive content and/or associated interactive content, generating the second media content according to the at least one target interactive content and/or associated interactive content.

In this embodiment, a preset third Share control may be included in a display area associated with each interactive content, so that the user can realize select at least one target interactive content and/or associated interactive content based on the third Share control. In some embodiments, in response to a triggering operation of the first user for the third share control associated with the at least one target interactive content and/or associated interactive content, the second media content may be generated according to the at least one target interactive content and/or associated interactive content.

According to the content sharing method provided by the embodiment, by displaying a preset third Share control in a display area associated with each interactive content, the first user can determine the target interactive content and/or associated interactive content based on the third Share control, enriching the display content in the page and the interaction mode based on the interactive content.

Further, on the basis of any of the above embodiments, the target interactive content further includes interactive information. The step 102 comprises:
combining interactive information corresponding to the at least one target interactive content and the at least one target media content and/or associated interactive content in the at least one target interactive content and/or the first media content, according to a display style in a preset first display style template, to obtain the second media content.

In this embodiment, in order to realize fast generation of the second media content, a first display style template may be preset, where the first display style template is preset with a display position, a display size, and the like of interactive information corresponding to the target interactive content and at least one target media content and/or associated interactive content and/or the first media content.

The target interactive content may further include interactive information. The interactive information may be interactive text in the target interactive content and identification information of a poster who posts the interactive text. Therefore, after the at least one target interactive content is determined, interactive information corresponding to the at least one target interactive content and the at least one target media content and/or associated interactive content in the at least one target interactive content and/or the first media content may be combined according to a display style in a preset first display style template, to obtain the second media content.

In some embodiments, on the basis of any of the foregoing embodiments, the second media content includes interactive information corresponding to the at least one target interactive content and at least one target media content in the at least one target interactive content.

The interactive information comprises interactive text and/or identification information of a poster corresponding to the interactive text.

As an implementation, the second media content may include interactive information corresponding to the at least one target interactive content and at least one target media content in the at least one target interactive content. The interactive information may include interactive text in the target interactive content.

Further, in order to enable the first user to know the user who posted the interactive text, the interactive information may further include identification information of the poster who posted the interactive text.

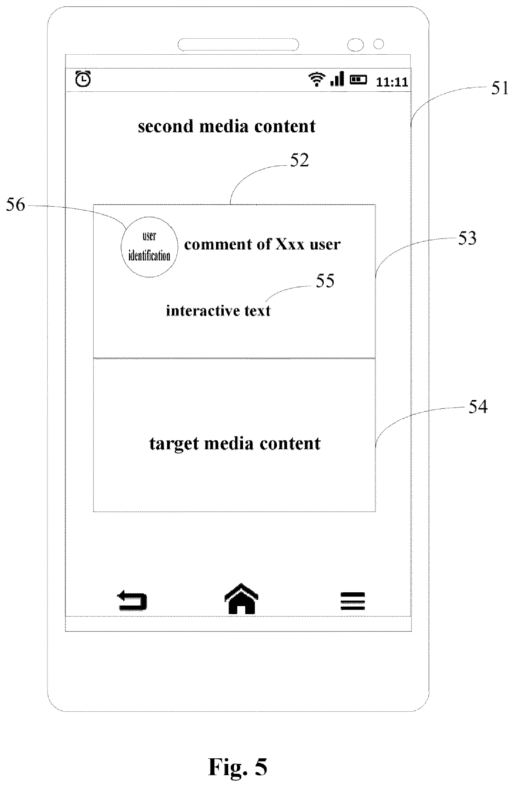

Fig. 5 is a schematic view of a display interface according to an embodiment of the present disclosure, and as shown in Fig. 5, second media content 51 includes interactive information 53 corresponding to at least one target interactive content 52 and at least one target media content 54 in the at least one target interactive content. The interactive information 53 includes interactive text 55 and identification information 56 of a poster corresponding to the interactive text.

According to the content sharing method provided by the embodiment, by presetting a first display style template, after at least one target interactive content determined by the first user is determined, second media content can be quickly generated based on the at least one target interactive content on the basis of the first display style template. In addition, by generating the second media content based on interactive information corresponding to the at least one target interactive content and at least one target media content in the at least one target interactive content and/or the first media content, the display content in the second media content can be enriched.

In some embodiments, on the basis of any of the above embodiments, the step 102 comprises:
in response to a sharing operation triggered by the first user for the at least one target interactive content and/or associated interactive content, generating the second media content based on the at least one target interactive content and/or associated interactive content, or
in response to a sharing operation triggered by the first user for the at least one target interactive content and/or associated interactive content, generating the second media content based on the at least one target interactive content and/or associated interactive content and the first media content.

In this embodiment, after determining the at least one target interactive content, in response to a sharing operation triggered by the first user for the at least one target interactive content and/or associated interactive content, the second media content may be generated based on the at least one target interactive content and/or associated interactive content. For example, after determining at least one piece of comment information including interactive information and image media content, the second media content may be generated based on the at least one piece of comment information, and the interactive information and the image media content may be included in the second media content.

As an implementation, when generating the second media content based on the at least one target interactive content and/or associated interactive content, the first media content may be further added to the second media content. In response to a sharing operation triggered by the first user for the at least one target interactive content and/or associated interactive content, the second media content is generated based on the at least one target interactive content and/or associated interactive content and the first media content. In the second media content, the first media content may be displayed in a media content manner, or may be displayed in a link manner, or, may be displayed in an identification manner, etc., which is not limited in this disclosure.

According to the content sharing method provided by the embodiment, by in response to a sharing operation triggered by the first user for the at least one target interactive content and/or associated interactive content, generating the second media content based on the at least one target interactive content and/or associated interactive content or based on the at least one target interactive content and/or associated interactive content and the first media content, more diversified second media content can be obtained, and the user experience is improved.

Further, on the basis of any of the above embodiments, the step 102 comprises:
in response to a sharing operation triggered by the first user for the at least one target interactive content, displaying a media content editing page, displaying to-be-edited media content in the media content editing page, wherein, the to-be-edited media content comprises the at least one target interactive content or the to-be-edited media content comprises the at least one target interactive content and/or associated interactive content and the first media content; and
in response to a triggering operation of the first user for the to-be-edited media content, editing the to-be-edited media content to obtain the second media content.

In this embodiment, in order to make the second media content generated based on the at least one target interactive content more fit with personalized requirements of the first user, before the second media content is generated, an editing operation may be performed on the to-be-edited media content generated by the at least one target interactive content.

In some embodiments, in response to a sharing operation triggered by the first user for the at least one target interactive content, a preset media content editing page may be displayed. To-be-edited media content can be displayed in the media content editing page, and the to-be-edited media content includes at least one target interactive content. Or, the to-be-edited media content includes at least one target interactive content and/or associated interactive content and the first media content.

In the media content editing page, a user can perform a triggering operation on the to-be-edited content so as to edit the to-be-edited content. In response to a triggering operation of the first user for the to-be-edited media content, an editing operation is performed on the to-be-edited media content to obtain the second media content.

According to the content sharing method provided by the embodiment, by displaying a media content editing page in response to a sharing operation triggered by the first user for the at least one target interactive content, the first user can edit the to-be-edited media content on the media content editing page, so that the finally generated second media content more fits with the personalized requirement of the first user, improving the user experience.

In some embodiments, on the basis of any of the above embodiments, the in response to a triggering operation of the first user for the to-be-edited media content, editing the to-be-edited media content to obtain the second media content, comprises:
in response to a first editing operation triggered by the first user for the to-be-edited media content, editing display parameters corresponding to the to-be-edited media content to obtain the second media content.

The display parameters comprise a display size and/or display position corresponding to interactive information in the at least one target interactive content and at least one target media content and/or associated interactive content in the at least one target interactive content.

In this embodiment, the first user may adjust the display parameters in the to-be-edited media content according to actual requirements.

In some embodiments, in response to a first editing operation triggered by the first user for the to-be-edited media content, display parameters corresponding to the to-be-edited media content are edited to obtain the second media content. The display parameters comprise a display size and/or display position corresponding to interactive information in at least one target interactive content and at least one target media content and/or associated interactive content in at least one target interactive content.

As an implementation, the first user may trigger a parameter adjusting control through a preset gesture such as a long press of the to-be-edited media content, and input the display parameters based on the parameter adjusting control, so as to adjust the display parameters in the to-be-edited media content.

Or, the first user may adjust the display position of the interactive information and/or the at least one target media content and/or the associated interactive content by dragging the interactive information and/or the at least one target media content and/or the associated interactive content in the to-be-edited media content. The display size of the interactive information and/or the at least one target media content and/or the associated interactive content is adjusted by an operation such as kneading, zooming of the interactive information and/or the at least one target media content and/or the associated interactive content.

According to the content sharing method provided by the embodiment, by editing the display parameters corresponding to the to-be-edited media content in response to a first editing operation triggered by the first user for the to-be-edited media content, the display parameters in the second media content can better fit with the personalized requirements of the first user.

In some embodiments, on the basis of any of the above embodiments, the in response to a triggering operation of the first user for the to-be-edited media content, editing the to-be-edited media content to obtain the second media content, comprises:
in response to a second editing operation triggered by the first user for the to-be-edited media content, editing a display style of the to-be-edited media content to obtain second media content.

In this embodiment, the first user may further perform an editing operation on the display style of the to-be-edited media content. The display style includes but is not limited to displaying, in the second media content, the interactive information in the at least one target interactive content and the target media content; displaying, in the second media content, the interactive information in the at least one target interactive content, the target media content and the first media content; displaying, in the second media content, only the interactive information in the at least one target interactive content; and displaying, in the second media content, at least one target media content in the at least one target interactive content and the first media content.

The second editing operation may be a single-click, a double-click, a long-press, or the like of the to-be-edited media content, which is not limited by this disclosure.

In response to a second editing operation triggered by the first user for the to-be-edited media content, an editing operation may be performed on the display style of the to-be-edited media content to obtain the second media content.

Further, on the basis of any of the above embodiments, the in response to a second editing operation triggered by the first user for the to-be-edited media content, editing a display style of the to-be-edited media content to obtain second media content, comprises:
determining a second display style template to be switched in response to the second editing operation triggered by the first user for the to-be-edited media content; and
combining interactive information corresponding to the at least one target interactive content and at least one target media content and/or the associated interactive content in the at least one target interactive content and/or the first media content, according to a display style in the second display style template to obtain the second media content.

In this embodiment, in order to enrich the display style of the second media content, a plurality of different display style templates may be preset. In the process of editing the display style, the display style can be switched by switching different display style templates.

In some embodiments, in response to a second editing operation triggered by the first user for the to-be-edited media content, a second display style template to be switched may be determined in multiple preset display style templates. Interactive information corresponding to the at least one target interactive content and at least one target media content and/or associated interactive content in the at least one target interactive content and/or the first media content are combined according to the display style in the second display style template, and the to-be-edited media content, which is generated based on the second display style template is displayed. If the first user stops triggering the second editing operation, the to-be-edited media content, which is generated based on the second display style template, may be determined as the second media content. Otherwise, it may be returned to the step of determining a second display style template to be switched in response to the second editing operation triggered by the first user for the to-be-edited media content, until the first user stops triggering the second editing operation to obtain the second media content.

According to the content sharing method provided by the embodiment, by in response to a second editing operation triggered by the first user for the to-be-edited media content, editing the display style of the to-be-edited media content to obtain the second media content, the display style can be quickly switched, improving the content editing efficiency. In addition, by editing the display style of the to-be-edited media content, the display style of the second media content can better fit with the personalized requirements of the first user, improving the user experience.

Further, on the basis of any of the above embodiments, the determining a second display style template to be switched in response to the second editing operation triggered by the first user for the to-be-edited media content, comprises:
in response to the second editing operation triggered by the first user for the to-be-edited media content, randomly selecting the second display style template from a plurality of preset display style templates, or
the determining a second display style template to be switched in response to the second editing operation triggered by the first user for the to-be-edited media content, comprises:
   in response to the second editing operation triggered by the first user for the to-be-edited media content, displaying a template list in the media content editing page, wherein, the template list comprises the plurality of preset display style templates;
   in response to a selecting operation of the first user in the display template list, determining the display style template selected by the first user as the second display style template.

In this embodiment, in order to enrich the display style of the second media content, a plurality of different display style templates may be preset. In the process of editing the display style of the to-be-edited media content, the display style template can be randomly determined or determined by the first user himself.

In some embodiments, in response to the second editing operation triggered by the first user for the to-be-edited media content, a second display style template may be randomly selected from a preset plurality of display style templates, and the to-be-edited media content is generated based on the second display style template, and displayed on the display interface for the first user to view.

As an implementation, in response to the second editing operation triggered by the first user for the to-be-edited media content, a template list may be displayed in the media content editing page, where the template list includes a plurality of preset display style templates. In response to a selecting operation of the first user in the display template list, the display style template selected by the first user is determined as the second display style template, and the to-be-edited media content is generated based on the second display style template, and displayed on the display interface for the first user to view.

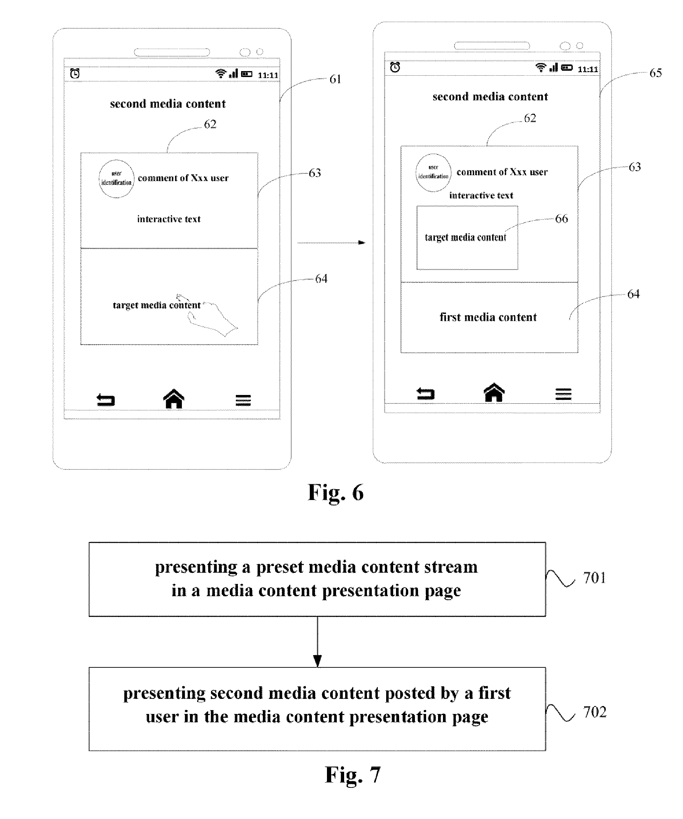

Fig. 6 is a schematic diagram of another interface interaction according to an embodiment of the present disclosure, and as shown in Fig. 6, to-be-edited media content 61 may be media content generated according to a preset first display style template, and the to-be-edited media content 61 may include target interactive content 62, where the target interactive content 62 includes interactive information 63 and target media content 64. In response to a second editing operation triggered by the first user for the to-be-edited media content 61, to-be-edited media content 65 which is generated based on a preset second display style template may be displayed, where the interactive information 63 in the target interactive content 62, the target media content 64 and the associated first media content 66 may be included in the to-be-edited media content 65 which is generated based on the preset second display style template.

According to the content sharing method provided by the embodiment, by in response to the second editing operation triggered by the first user for the to-be-edited media content, randomly selecting a second display style template from a plurality of preset display style templates, switching of the display style templates can be rapidly realized, improving the efficiency of the media content editing operation. By displaying a template list in the media content editing page in response to the second editing operation triggered by the first user for the to-be-edited media content, the first user can select the second display style template according to actual requirements, and the edited second media content can better fit with the personalized requirements of the first user.

Fig. 7 is a schematic flowchart of a content sharing method, applied to a client of a second user, according to an embodiment of the present disclosure, as shown in Fig. 7, comprising:
step 701, presenting a preset media content stream in a media content presentation page;
step 702, presenting second media content posted by a first user in the media content presentation page;
wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

The execution subject of the embodiment is a content sharing apparatus, and the content sharing apparatus can be coupled to the client of the second user. Therefore, a browsing operation of the second media content based on the interactive content can be carried out based on a triggering operation of the user on the client. In some embodiments, the content sharing apparatus may also be coupled to a server in communication connection with a terminal device installed with the client of the second user, so as to control the terminal device to perform a browsing operation of second media content based on the interactive content according to a triggering operation of the user on the terminal device.

In this embodiment, a preset media content stream may be presented in the media content presentation page. The media content stream may include second media content, and the media content in the media content stream may be video media content, audio media content, image-text media content, and the like, which is not limited in the present disclosure.

Further, second media content posted by the first user may be presented in the media content presentation page. The second media content may be generated by the first user based on at least one target interactive content and/or associated interactive content in the first media content, wherein, the target interactive content comprises at least one target media content and/or the associated interactive content comprises at least one interactive content associated with the target interactive content.

It should be noted that, the target interactive content may include at least one target media content. The target media content may be image media content, video media content, or the like included in the target interactive content.

Further, on the basis of any of the above embodiments, the step 702 comprises:
displaying, in the media content presentation page, interactive information in the at least one target interactive content and/or target media content in the at least one target interactive content;
wherein, the target interactive information comprises interactive text and/or identification information of a poster corresponding to the interactive text.

In this embodiment, when the second media content is displayed in the media content presentation page, interactive information in the at least one target interactive content and/or target media content in the at least one target interactive content may be displayed, wherein, the target interactive information comprises interactive text and/or identification information of a poster corresponding to the interactive text.

As an implementation, the interactive information may be displayed in a first display area in the media content presentation page, and target media content in the at least one target interactive content may be presented in a second display area in the media content presentation page.

According to the content sharing method provided by the embodiment, by presenting, in the media content presentation page, second media content which is posted by the first user and generated based on at least one target interactive content in the first media content, the second user can view the second media content. And, the second user is able to view, based on the second media content, its associated at least one interactive content.

Further, on the basis of any of the above embodiments, after the step 702, the method further comprises:
in response to a triggering operation of the second user for any target interactive content in the second media content, presenting the first media content and/or displaying at least one interactive content corresponding to the first media content. It is understood that, the triggering operation on the target interactive content may be a triggering operation on the target media content or a triggering operation on the interactive information.

In this embodiment, after the second media content is presented in the media content presentation page, the second user may perform a triggering operation on any target interactive content in the second media content. In response to the triggering operation, the first media content and/or at least one interactive content corresponding to the first media content can be presented.

Further, on the basis of any of the above embodiments, after the displaying at least one interactive content corresponding to the first media content, the method further comprises:
displaying target interactive content triggered by the second user in the at least one interactive content in a distinguishing manner.

In this embodiment, when the interactive content associated with the first media content is large, the second user may not be able to view the currently selected target interactive content at the first time. Therefore, in order to enable the second user to view the target interactive content more intuitively, the target interactive content triggered by the second user can be displayed in at least one interactive content in a distinguishing manner.

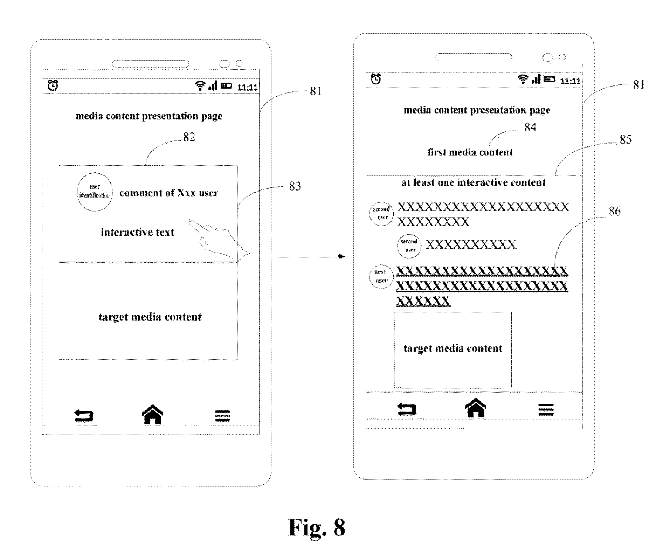

Fig. 8 is a schematic diagram of an interface interaction according to an embodiment of the present disclosure, and as shown in Fig. 8, second media content 82 posted by a first user may be displayed in a media content presentation page 81. The second media content 82 includes target interactive content 83. In response to a triggering operation the second user for the target interactive content 83, first media content 84 associated with the target interactive content 83 may be presented, and at least one interactive content 85 corresponding to the first media content 84 is displayed. Target interactive content 86 triggered by a second user can be displayed in the at least one interactive content 85 in a distinguishing manner.

According to the content sharing method provided by the embodiment, by in response to a triggering operation of the second user for any target interactive content in the second media content, presenting the first media content and/or displaying at least one interactive content corresponding to the first media content, the second user can quickly view the first media content and/or the at least one interactive content based on the second media content. In addition, by displaying the target interactive content triggered by the second user in at least one interactive content in a distinguishing manner, the second user can view the currently triggered target interactive content more intuitively, improving the user experience.

In some embodiments, the second media content further comprises the first media content and/or an associated identification of the first media content.

Further, on the basis of any of the above embodiments, after the step 702, the method further comprises:
in response to a triggering operation of the second user for the first media content in the second media content and/or the associated identification of the first media content, skipping to present the first media content.

In this embodiment, the second media content may further include first media content, and the first media content may be displayed in the second media content in a form of media content. Alternatively, the first media content may be displayed in the second media content in a form of an associated identification.

Further, the second user may enable viewing of the first media content through the second media content. In response to a triggering operation of the second user for the first media content in the second media content and/or the associated identification of the first media content, it is skipped to present the first media content.

According to the content sharing method provided by the embodiment, by in response to a triggering operation of the second user for the first media content in the second media content and/or the associated identification of the first media content, skipping to present the first media content, the first media content associated with at least media content can be quickly viewed on the basis of the second media content, enriching the content presented in the media content presentation page.

Further, on the basis of any of the above embodiments, the target media content in the target interactive content includes image media content in the target interactive content. After the step 702, the method further comprises:
in response to a triggering operation of the second user for the target media content in the second media content, locating the image media content and the target interactive content associated with the image media content in at least one interactive content associated with the first media content.

In this embodiment, the second media content may include at least one piece of interactive information corresponding to the target interactive content and at least one target media content. When the second user performs a triggering operation on the target media content, it can be skipped to present the first media content, and the image media content and the target interactive content associated with the image media content are located in at least one interactive content associated with the first media content, so that the second user can view the image media content in the first media content.

Further, on the basis of any of the above embodiments, after locating the image media content and the target interactive content associated with the image media content in a plurality of interactive contents associated with the first media content, the method further comprises:
displaying the target interactive content and the image media content in the at least one interactive content in a distinguishing manner.

In this embodiment, when the interactive content associated with the first media content is large, the second user may not be able to view the currently selected target interactive content at the first time. Therefore, in order to enable the second user to view the target interactive content and the image media content more intuitively, the target interactive content and the image media content can be displayed in at least one interactive content in a distinguishing manner.

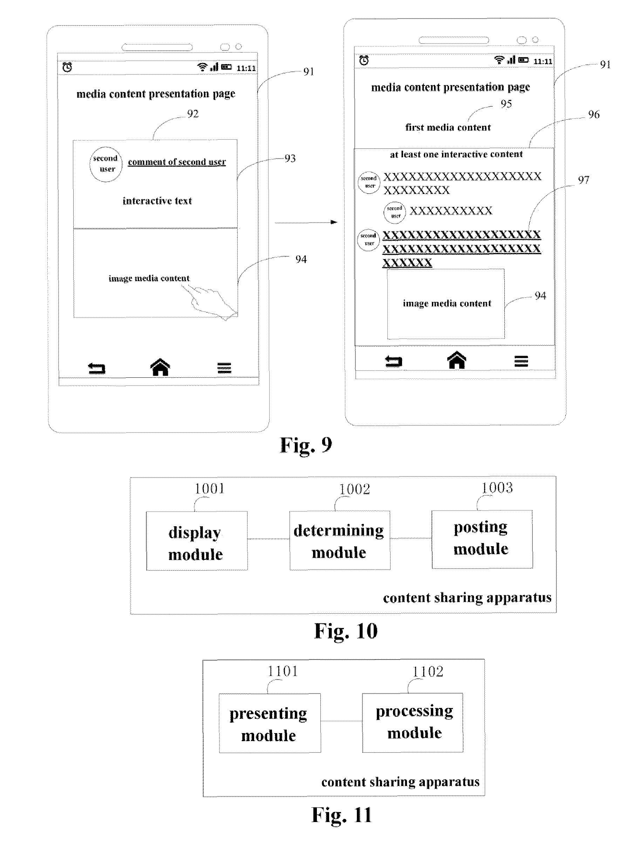

Fig. 9 is a schematic diagram of an interface interaction according to an embodiment of the present disclosure, and as shown in Fig. 9, second media content posted by a first user may be displayed in a media content presentation page 91. The second media content includes interactive information 93 associated with the target interactive content 92 and image media content 94. In response to a triggering operation of the second user for the image media content 94, first media content 95 may be displayed, and the image media content 94 and target interactive content 97 associated with the image media content may be located in at least one interactive content 96 associated with the first media content 95.

According to the content sharing method provided by the embodiment, by in response to a triggering operation of the second user for the target media content in the second media content, locating the image media content and the target interactive content associated with the image media content in at least one interactive content associated with the first media content, the target media content in the second media content can be viewed quickly based on the second media content. In addition, by displaying the target interactive content and the image media content in the at least one interactive content in a distinguishing manner, the second user can view the target interactive content and the image media content more intuitively.

Further, on the basis of any of the above embodiments, after the step 702, the method further comprises:
in response to a triggering operation of the second user for the associated interactive content in the second media content, presenting the first media content;
detecting whether the associated interactive content is associated with upper-level interactive content, if so, displaying the associated interactive content and the upper-level interactive content, and displaying the associated interactive content under the upper-level interactive content.

In this embodiment, the interactive content may correspondingly has associated interactive content. The interactive content and the associated interactive content may constitute complete interactive content. In order to enable the second user to know the complete interactive content, the interactive content and the associated interactive content having an association therebetween may be displayed in association.

In some embodiments, in response to a triggering operation of the second user for the associated interactive content in the second media content, it can be skipped to present the first media content associated with the associated interactive content. It is detected whether the associated interactive content is associated with upper-level interactive content, if so, the associated interactive content and the upper-level interactive content are displayed, and the associated interactive content is displayed under the upper-level interactive content. On the contrary, if the associated interactive content does not have associated upper-level interactive content, the associated interactive content can be directly located and displayed in at least one interactive content.

According to the content sharing method provided by the embodiment, by presenting the first media content in response to a triggering operation of the second user for the associated interactive content in the second media content, when it is detected that the associated interactive content is associated with upper-level interactive content, displaying the associated interactive content and the upper-level interactive content, and displaying the associated interactive content under the upper-level interactive content, the second user can view the complete interactive content, improving the user experience.

Fig. 10 is a schematic structural diagram of a content sharing apparatus, applied to a client of a first user, according to an embodiment of the present disclosure, and as shown in Fig. 10, the apparatus includes: a display module 1001, a determining module 1002, and a posting module 1003, wherein, the display module 1001 is configured to, display at least one interactive content associated with currently presented first media content in a media content presentation page, wherein, the interactive content is posted by the first user and/or a second user; the determining module 1002 is configured to, in response to a sharing operation triggered by the first user for at least one target interactive content, generate second media content according to the at least one target interactive content and/or associated interactive content, wherein, the target interactive content comprises at least one target media content and/or the associated interactive content comprises at least one interactive content associated with the target interactive content; and the posting module 1003 is configured to, post the second media content.

Further, on the basis of any of the above embodiments, the media content presentation page is provided with an Interact control. The display module is configured to: present the first media content in the media content presentation page, and in response to a triggering operation of the first user for the Interact control, display at least one interactive content associated with the first media content.

Further, on the basis of any of the above embodiments, the determining module is configured to: generate the second media content based on the at least one target interactive content and at least one associated interactive content associated with the at least one target interactive content.

Further, on the basis of any of the above embodiments, the determining module is configured to: in response to a first triggering operation of the first user for any target interactive content, display a function list associated with the target interactive content, wherein, the function list comprises a first Share control, and in response to a triggering operation of the first user for the first Share control, generate the second media content according to target interactive content selected by the user.

Further, on the basis of any of the above embodiments, the determining module is configured to: in response to a second triggering operation of the first user for any interactive content, switch a display state of at least one candidate interactive content associated with the first media content into a selectable state; in response to a selecting operation triggered by the first user for the at least one candidate interactive content, determine at least one target interactive content and/or associated interactive content selected by the first user; display a preset second Share control; and in response to a triggering operation of the first user for the second Share control, generate the second media content according to the at least one target interactive content and/or associated interactive content.

Further, on the basis of any of the above embodiments, a display area associated with each interactive content includes a preset third Share control. The determining module is configured to: in response to a triggering operation of the first user for a third Share control associated with at least one target interactive content, generate the second media content according to the at least one target interactive content and/or associated interactive content.

Further, on the basis of any of the above embodiments, the target interactive content further includes interactive information. The determining module is configured to: combine interactive information corresponding to the at least one target interactive content and at least one target media content and/or associated interactive content in the at least one target interactive content and/or the first media content, according to a display style in a preset first display style template to obtain the second media content.

Further, on the basis of any of the above embodiments, the second media content includes interactive information corresponding to the at least one target interactive content and at least one target media content in the at least one target interactive content, wherein, the interactive information comprises interactive text and/or identification information of a poster corresponding to the interactive text.

Further, on the basis of any of the above embodiments, the determining module is configured to: in response to a sharing operation triggered by the first user for the at least one target interactive content and/or associated interactive content, generate the second media content based on the at least one target interactive content and/or associated interactive content, or, in response to a sharing operation triggered by the first user for the at least one target interactive content and/or associated interactive content, generate the second media content based on the at least one target interactive content and/or associated interactive content and the first media content.

Further, on the basis of any of the above embodiments, the determining module is configured to: in response to a sharing operation triggered by the first user for the at least one target interactive content, display a media content editing page, and display to-be-edited media content in the media content editing page, wherein, the to-be-edited media content comprises the at least one target interactive content or the to-be-edited media content comprises the at least one target interactive content and/or associated interactive content and the first media content; and in response to a triggering operation of the first user for the to-be-edited media content, edit the to-be-edited media content to obtain the second media content.

Further, on the basis of any of the above embodiments, the determining module is configured to: in response to a first editing operation triggered by the first user for the to-be-edited media content, edit display parameters corresponding to the to-be-edited media content to obtain the second media content, wherein, the display parameters comprise a display size and/or display position corresponding to interactive information in the at least one target interactive content and at least one target media content and/or associated interactive content in the at least one target interactive content.

Further, on the basis of any of the above embodiments, the determining module is configured to: in response to a second editing operation triggered by the first user for the to-be-edited media content, edit a display style of the to-be-edited media content to obtain the second media content.

Further, on the basis of any of the above embodiments, the determining module is configured to: in response to a second editing operation triggered by the first user for the to-be-edited media content, determine a second display style template to be switched, and combine interactive information corresponding to the at least one target interactive content and at least one target media content in the at least one target interactive content and/or the first media content, according to a display style in the second display style template to obtain the second media content.

Further, on the basis of any of the above embodiments, the determining module is configured to: in response to a second editing operation triggered by the first user for the to-be-edited media content, randomly selecting a second display style template from a plurality of preset display style templates. Or, the in response to a second editing operation triggered by the first user for the to-be-edited media content, determining a second display style template to be switched, comprises: in response to the second editing operation triggered by the first user for the to-be-edited media content, displaying a template list in the media content editing page, wherein the template list comprises a plurality of preset display style templates, and in response to a selecting operation of the first user in the display template list, determining a display style template selected by the first user as the second display style template.

Further, on the basis of any of the above embodiments, the target media content includes image media content in the target interactive content.

Fig. 11 is a schematic structural diagram of a content sharing apparatus, applied to a client of a second user, according to an embodiment of the present disclosure, as shown in Fig. 11, comprising: a presenting module 1101 and a processing module 1102, wherein the presenting module 1101 is configured to, present a preset media content stream in a media content presentation page; and the processing module 1102 is configured to, in response to a switching operation triggered by the second user in the media content presentation page, present second media content posted by a first user in the media content presentation page; wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

Further, on the basis of any one of the above embodiments, the presenting module is configured to: display, in the media content presentation page, interactive information in the at least one target interactive content and/or target media content in the at least one target interactive content, wherein, the target interactive information comprises interactive text and/or identification information of a poster corresponding to the interactive text.

Further, on the basis of any one of the above embodiments, the apparatus further comprises: the presenting module configured to, in response to a triggering operation of the second user for any target interactive content in the second media content, present the first media content, and/or display at least one interactive content corresponding to the first media content.

Further, on the basis of any one of the above embodiments, the apparatus further comprises: the presenting module configured to display target interactive content triggered by the second user in the at least one interactive content in a distinguishing manner.

Further, on the basis of any of the above embodiments, the second media content further includes the first media content and/or an associated identification of the first media content.

Further, on the basis of any one of the above embodiments, the apparatus further comprises: the presenting module configured to, in response to a triggering operation of the second user for the first media content in the second media content and/or the associated identification of the first media content, skip to present the first media content.

Further, on the basis of any of the above embodiments, the target media content in the target interactive content includes image media content in the target interactive content. The apparatus further comprises: the presenting module configured to, in response to a triggering operation of the second user for the target media content in the second media content, locate the image media content and target interactive content associated with the image media content in at least one interactive content associated with the first media content.

Further, on the basis of any of the above embodiments, the apparatus further comprises: the presenting module configured to, display the target interactive content and the image media content in the at least one interactive content in a distinguishing manner.

Further, on the basis of any of the above embodiments, the apparatus further comprises: the presenting module configured to, in response to a triggering operation of the second user for the associated interactive content in the second media content, present the first media content, and a detecting module configured to, detect whether the associated interactive content is associated with upper-level interactive content, if so, display the associated interactive content and the upper-level interactive content, and display the associated interactive content under the upper-level interactive content.

The apparatus provided in this embodiment may be configured to implement the technical solutions of the method embodiments, and the implementation principles and technical effects are similar, which are not described herein again.

In order to implement the above embodiments, an embodiment of the present disclosure further provides an electronic device, including: a processor and a memory.
the memory storing computer executable instructions; and
the processor executing the computer executable instructions stored by the memory, to cause the processor to perform the content sharing method according to any of the embodiments.

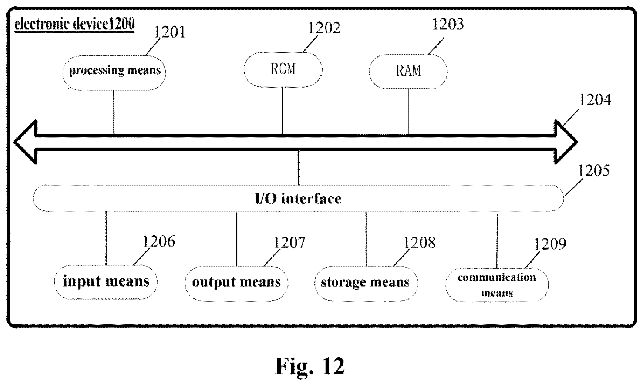

Fig. 12 is a schematic structural diagram of an electronic device according to an embodiment of the present disclosure, and as shown in Fig. 12, the electronic device 1200 may be a terminal device or a server. Among them, the terminal device may include, but is not limited to, a mobile terminal such as a mobile phone, a notebook computer, a digital broadcast receiver, a Personal Digital Assistant (PDA), a Portable Android Device (PAD), a Portable Multimedia Player (PMP), a car terminal (e.g., a car navigation terminal), etc., and a fixed terminal such as a Digital TV, a desktop computer, etc. The electronic device shown in Fig. 12 is only an example, and should not bring any limitation to the functions and the scope of use of the embodiments of the present disclosure.

As shown in Fig. 12, the electronic device 1200 may include a processing means (e.g., a central processing unit, a graphics processor, etc.) 1201, which may perform various appropriate actions and processes according to a program stored in a Read Only Memory (ROM) 1202 or a program loaded from a storage means 1208 into a Random Access Memory (RAM) 1203. In the RAM 1203, various programs and data necessary for the operation of the electronic device 1200 are also stored. The processing means 1201, the ROM 1202, and the RAM 1203 are connected to each other by a bus 1204. An input/output (I/O) interface 1205 is also connected to the bus 1204.

Generally, the following means may be connected to the I/O interface 1205: input means 1206 including, for example, a touch screen, touch pad, keyboard, mouse, camera, microphone, accelerometer, gyroscope, or the like; an output means 1207 including, for example, a Liquid Crystal Display (LCD), a speaker, a vibrator, and the like; the storage means 1208 including, for example, magnetic tape, hard disk, etc.; and a communication means 1209. The communication means 1209 may allow the electronic device 1200 to communicate wirelessly or by wire with other devices to exchange data. While Fig. 12 illustrates the electronic device 1200 having various means, it is to be understood that not all illustrated means are required to be implemented or provided. More or fewer means may be alternatively implemented or provided.

In particular, the processes described above with reference to the flowcharts may be implemented as computer software programs, according to the embodiments of the present disclosure. For example, the embodiments of the present disclosure include a computer program product comprising a computer program embodied on a computer-readable medium, the computer program comprising program code for performing the method illustrated by the flowchart. In such an embodiment, the computer program may be downloaded and installed from a network through the communication means 1209, or installed from the storage means 1208, or installed from the ROM 1202. The computer program, when executed by the processing means 1201, performs the above-described functions defined in the methods of the embodiments of the present disclosure.

It should be noted that the computer readable medium of the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a Random Access Memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer readable storage medium may be any tangible medium that can contain, or store a program for use by or in connection with an instruction execution system, apparatus, or device. In contrast, in the present disclosure, the computer readable signal medium may include a propagated data signal with computer readable program code embodied therein, for example, in baseband or as part of a carrier wave. Such a propagated data signal may take any of a variety of forms, including, but not limited to, electro-magnetic, optical, or any suitable combination thereof. The computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to: electrical wires, optical cables, RF (radio frequency), etc., or any suitable combination of the foregoing.

In order to implement the foregoing embodiments, an embodiment of the present disclosure further provides a computer readable storage medium having stored thereon computer executable instructions which, when executed by a processor, implement the content sharing method according to any of the foregoing embodiments.

In order to implement the foregoing embodiments, an embodiment of the present disclosure further provides a computer program product comprising a computer program which, when executed by a processor, implements the content sharing method according to any of the foregoing embodiments.

The computer readable medium may be embodied in the electronic device; or may be separate and not assembled into the electronic device.

The computer readable medium carries one or more programs which, when executed by the electronic device, cause the electronic device to perform the method shown in the above embodiments.

The above computer-readable medium has thereon carried one or more programs which, when executed by the electronic device, enables the electronic device to perform the method shown in the above embodiments.

Computer program code for performing the operation of the present disclosure may be written in one or more programming languages or a combination thereof, wherein the above programming language includes but is not limited to an object-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scenario where a remote computer is involved, the remote computer may be connected to a user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit does not, in some cases, constitute a limitation on the unit itself, for example, a first obtaining unit may also be described as a "unit configured to obtain at least two internet protocol addresses".

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard parts (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

In a first aspect, according to one or more embodiments of the present disclosure, there is provided a content sharing method, applied to a client of a first user, comprising:
displaying at least one interactive content associated with currently presented first media content in a media content presentation page, wherein, the interactive content is posted by the first user and/or a second user;
in response to a sharing operation triggered by the first user for at least one target interactive content, generating second media content according to the at least one target interactive content and/or associated interactive content, wherein, the target interactive content comprises at least one target media content and/or the associated interactive content comprises at least one interactive content associated with the target interactive content; and
posting the second media content.

According to one or more embodiments of the present disclosure, the media content presentation page is provided with an Interact control;
the displaying at least one interactive content associated with currently presented first media content in a media content presentation page, comprises:
presenting the first media content in the media content presentation page; and
in response to a triggering operation of the first user for the Interact control, displaying at least one interactive content associated with the first media content.

According to one or more embodiments of the present disclosure, the generating second media content according to the at least one target interactive content and/or associated interactive content, comprises:
generating the second media content based on the at least one target interactive content and at least one associated interactive content associated with the at least one target interactive content.

According to one or more embodiments of the present disclosure, the in response to a sharing operation triggered by the first user for at least one target interactive content, generating second media content according to the at least one target interactive content and/or associated interactive content, comprises:
in response to a first triggering operation of the first user for any target interactive content, displaying a function list associated with the target interactive content, wherein, the function list comprises a first Share control; and
in response to a triggering operation of the first user for the first Share control, generating the second media content according to target interactive content selected by the user.

According to one or more embodiments of the present disclosure, the in response to a sharing operation triggered by the first user for at least one target interactive content, generating second media content according to the at least one target interactive content and/or associated interactive content, comprises:
in response to a second triggering operation of the first user for any interactive content, switching a display state of at least one candidate interactive content associated with the first media content into a selectable state;
in response to a selecting operation triggered by the first user for the at least one candidate interactive content, determining at least one target interactive content and/or associated interactive content selected by the first user;
displaying a preset second Share control; and
in response to a triggering operation of the first user for the second Share control, generating the second media content according to the at least one target interactive content and/or associated interactive content.

According to one or more embodiments of the present disclosure, a display area associated with each interactive content includes a preset third Share control;
the in response to a sharing operation triggered by the first user for at least one target interactive content, generating second media content according to the at least one target interactive content and/or associated interactive content, comprises:
in response to a triggering operation of the first user for a third Share control associated with at least one target interactive content and/or associated interactive content, generating the second media content according to the at least one target interactive content and/or associated interactive content.

According to one or more embodiments of the present disclosure, the target interactive content further includes interactive information;
the generating the second media content according to the at least one target interactive content and/or associated interactive content, comprises:
combining interactive information corresponding to the at least one target interactive content and at least one target media content and/or associated interactive content in the at least one target interactive content and/or the first media content, according to a display style in a preset first display style template to obtain the second media content.

According to one or more embodiments of the present disclosure, the second media content includes interactive information corresponding to the at least one target interactive content and at least one target media content in the at least one target interactive content;
wherein, the interactive information comprises interactive text and/or identification information of a poster corresponding to the interactive text.

According to one or more embodiments of the present disclosure, the in response to a sharing operation triggered by the first user for at least one target interactive content, generating second media content according to the at least one target interactive content and/or associated interactive content, comprises:
in response to a sharing operation triggered by the first user for the at least one target interactive content and/or associated interactive content, generating the second media content based on the at least one target interactive content and/or associated interactive content; or
in response to a sharing operation triggered by the first user for the at least one target interactive content and/or associated interactive content, generating the second media content based on the at least one target interactive content and/or associated interactive content and the first media content.

According to one or more embodiments of the present disclosure, the in response to a sharing operation triggered by the first user for at least one target interactive content, generating second media content according to the at least one target interactive content and/or associated interactive content, comprises:
in response to the sharing operation triggered by the first user for the at least one target interactive content, displaying a media content editing page, and displaying to-be-edited media content in the media content editing page, wherein the to-be-edited media content comprises the at least one target interactive content or the to-be-edited media content comprises the at least one target interactive content and/or associated interactive content and the first media content; and
in response to a triggering operation of the first user for the to-be-edited media content, editing the to-be-edited media content to obtain the second media content.

According to one or more embodiments of the present disclosure, the in response to a triggering operation of the first user for the to-be-edited media content, editing the to-be-edited media content to obtain the second media content, comprises:
in response to a first editing operation triggered by the first user for the to-be-edited media content, editing display parameters corresponding to the to-be-edited media content to obtain the second media content;
wherein, the display parameters comprise a display size and/or display position corresponding to interactive information in the at least one target interactive content and at least one target media content and/or associated interactive content in the at least one target interactive content.

According to one or more embodiments of the present disclosure, the in response to a triggering operation of the first user for the to-be-edited media content, editing the to-be-edited media content to obtain the second media content, comprises:
in response to a second editing operation triggered by the first user for the to-be-edited media content, editing a display style of the to-be-edited media content to obtain the second media content.

According to one or more embodiments of the present disclosure, the in response to a second editing operation triggered by the first user for the to-be-edited media content, editing a display style of the to-be-edited media content to obtain the second media content, comprises:
in response to the second editing operation triggered by the first user for the to-be-edited media content, determining a second display style template to be switched; and
combining interactive information corresponding to the at least one target interactive content and at least one target media content and/or associated interactive content in the at least one target interactive content and/or the first media content, according to a display style in the second display style template to obtain the second media content.

According to one or more embodiments of the present disclosure, the in response to the second editing operation triggered by the first user for the to-be-edited media content, determining a second display style template to be switched, comprises:
in response to the second editing operation triggered by the first user for the to-be-edited media content, randomly selecting the second display style template from a plurality of preset display style templates; or
the in response to the second editing operation triggered by the first user for the to-be-edited media content, determining a second display style template to be switched, comprises:
   in response to the second editing operation triggered by the first user for the to-be-edited media content, displaying a template list in the media content editing page, wherein the template list comprises a plurality of preset display style templates;
   in response to a selecting operation of the first user in the display template list, determining a display style template selected by the first user as the second display style template.

According to one or more embodiments of the present disclosure, the target media content includes image media content in the target interactive content.

In a second aspect, according to one or more embodiments of the present disclosure, there is provided a content sharing method, applied to a client of a second user, comprising:
presenting a preset media content stream in a media content presentation page;
presenting second media content posted by a first user in the media content presentation page;
wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

According to one or more embodiments of the present disclosure, the presenting second media content posted by a first user in the media content presentation page, comprises:
displaying, in the media content presentation page, interactive information in the at least one target interactive content and/or target media content in the at least one target interactive content;
wherein, the target interactive information comprises interactive text and/or identification information of a a poster corresponding to the interactive text.

According to one or more embodiments of the present disclosure, after the presenting second media content posted by a first user in the media content presentation page, the method further comprises:
in response to a triggering operation of the second user for any target interactive content in the second media content, presenting the first media content, and/or displaying at least one interactive content corresponding to the first media content.

According to one or more embodiments of the present disclosure, after the displaying at least one interactive content corresponding to the first media content, the method further comprises:
displaying target interactive content triggered by the second user in the at least one interactive content in a distinguishing manner.

According to one or more embodiments of the present disclosure, the second media content further comprises the first media content and/or an associated identification of the first media content.

According to one or more embodiments of the present disclosure, after the presenting second media content posted by a first user in the media content presentation page, the method further comprises:
in response to a triggering operation of the second user for the first media content in the second media content and/or an associated identification of the first media content, skipping to display the first media content.

According to one or more embodiments of the present disclosure, the target media content in the target interactive content comprises image media content in the target interactive content;
after the presenting second media content posted by a first user in the media content presentation page, the method further comprises:
in response to a triggering operation of the second user for the target media content in the second media content, locating the image media content and target interactive content associated with the image media content in at least one interactive content associated with the first media content.

According to one or more embodiments of the present disclosure, after the locating the image media content and target interactive content associated with the image media content in at least one interactive content associated with the first media content, the method further comprises:
displaying the target interactive content and the image media content in the at least one interactive content in a distinguishing manner.

According to one or more embodiments of the present disclosure, after the presenting second media content posted by a first user in the media content presentation page, the method further comprises:
in response to a triggering operation of the second user for the associated interactive content in the second media content, presenting the first media content; and
detecting whether the associated interactive content is associated with upper-level interactive content, if so, displaying the associated interactive content and the upper-level interactive content, and displaying the associated interactive content under the upper-level interactive content.

In a third aspect, according to one or more embodiments of the present disclosure, there is provided a content sharing apparatus, applied to a client of a first user, comprising:
a display module configured to, display at least one interactive content associated with currently presented first media content in a media content presentation page, wherein, the interactive content is posted by the first user and/or a second user;
a determining module configured to, in response to a sharing operation triggered by the first user for at least one target interactive content, generate second media content according to the at least one target interactive content and/or associated interactive content, wherein, the target interactive content comprises at least one target media content and/or the associated interactive content comprises at least one interactive content associated with the target interactive content; and
a posting module configured to, post the second media content.

According to one or more embodiments of the present disclosure, the media content presentation page is provided with an Interact control;
the display module is configured to:
present the first media content in the media content presentation page, and
in response to a triggering operation of the first user for the Interact control, display at least one interactive content associated with the first media content.

According to one or more embodiments of the present disclosure, the determining module is configured to:
generate the second media content based on the at least one target interactive content and at least one associated interactive content associated with the at least one target interactive content.

According to one or more embodiments of the present disclosure, the determining module is configured to:
in response to a first triggering operation of the first user for any target interactive content, display a function list associated with the target interactive content, wherein, the function list comprises a first Share control, and
in response to a triggering operation of the first user for the first Share control, generate the second media content according to target interactive content selected by the user.

According to one or more embodiments of the present disclosure, the determining module is configured to:
in response to a second triggering operation of the first user for any interactive content, switch a display state of at least one candidate interactive content associated with the first media content into a selectable state;
in response to a selecting operation triggered by the first user for the at least one candidate interactive content, determine at least one target interactive content and/or associated interactive content selected by the first user;
display a preset second Share control; and
in response to a triggering operation of the first user for the second Share control, generate the second media content according to the at least one target interactive content and/or associated interactive content.

According to one or more embodiments of the present disclosure, a display area associated with each interactive content includes a preset third Share control;
the determining module is configured to:
in response to a triggering operation of the first user for a third Share control associated with at least one target interactive content and/or associated interactive content, generate the second media content according to the at least one target interactive content and/or associated interactive content.

According to one or more embodiments of the present disclosure, the target interactive content further includes interactive information;
the determining module is configured to:
combine interactive information corresponding to the at least one target interactive content and at least one target media content and/or associated interactive content in the at least one target interactive content and/or the first media content, according to a display style in a preset first display style template to obtain the second media content.

According to one or more embodiments of the present disclosure, the second media content includes interactive information corresponding to the at least one target interactive content and at least one target media content in the at least one target interactive content,
wherein, the interactive information comprises interactive text and/or identification information of a poster corresponding to the interactive text.

According to one or more embodiments of the present disclosure, the determining module is configured to:
in response to a sharing operation triggered by the first user for the at least one target interactive content and/or associated interactive content, generate the second media content based on the at least one target interactive content and/or associated interactive content, or,
in response to a sharing operation triggered by the first user for the at least one target interactive content and/or associated interactive content, generate the second media content based on the at least one target interactive content and/or associated interactive content and the first media content.

According to one or more embodiments of the present disclosure, the determining module is configured to:
in response to a sharing operation triggered by the first user for the at least one target interactive content, display a media content editing page, and display to-be-edited media content in the media content editing page, wherein, the to-be-edited media content comprises the at least one target interactive content or the to-be-edited media content comprises the at least one target interactive content and/or associated interactive content and the first media content; and
in response to a triggering operation of the first user for the to-be-edited media content, edit the to-be-edited media content to obtain the second media content.

According to one or more embodiments of the present disclosure, the determining module is configured to:
in response to a first editing operation triggered by the first user for the to-be-edited media content, edit display parameters corresponding to the to-be-edited media content to obtain the second media content,
wherein, the display parameters comprise a display size and/or display position corresponding to interactive information in the at least one target interactive content and at least one target media content and/or associated interactive content in the at least one target interactive content.

According to one or more embodiments of the present disclosure, the determining module is configured to: in response to a second editing operation triggered by the first user for the to-be-edited media content, edit a display style of the to-be-edited media content to obtain the second media content.

According to one or more embodiments of the present disclosure, the determining module is configured to:
in response to a second editing operation triggered by the first user for the to-be-edited media content, determine a second display style template to be switched, and
combine interactive information corresponding to the at least one target interactive content and at least one target media content and/or associated interactive content in the at least one target interactive content and/or the first media content, according to a display style in the second display style template to obtain the second media content.

According to one or more embodiments of the present disclosure, the determining module is configured to:
in response to a second editing operation triggered by the first user for the to-be-edited media content, randomly selecting the second display style template from a plurality of preset display style templates; or,
the in response to a second editing operation triggered by the first user for the to-be-edited media content, determining a second display style template to be switched, comprises:
   in response to the second editing operation triggered by the first user for the to-be-edited media content, displaying a template list in the media content editing page, wherein the template list comprises a plurality of preset display style templates, and
   in response to a selecting operation of the first user in the display template list, determining a display style template selected by the first user as the second display style template.

According to one or more embodiments of the present disclosure, the target media content includes image media content in the target interactive content.

In a fourth aspect, according to one or more embodiments of the present disclosure, there is provided a content sharing apparatus, applied to a client of a second user, comprising:
a presenting module configured to, present a preset media content stream in a media content presentation page;
a processing module configured to, in response to a switching operation triggered by the second user in the media content presentation page, present second media content posted by a first user in the media content presentation page;
wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

According to one or more embodiments of the present disclosure, the display module is configured to:
display, in the media content presentation page, interactive information in the at least one target interactive content and/or target media content in the at least one target interactive content,
wherein, the target interactive information comprises interactive text and/or identification information of a poster corresponding to the interactive text.

According to one or more embodiments of the present disclosure, the apparatus further comprises:
the presenting module configured to, in response to a triggering operation of the second user for any target interactive content in the second media content, present the first media content, and/or display at least one interactive content corresponding to the first media content.

According to one or more embodiments of the present disclosure, the apparatus further comprises:
the presenting module configured to display target interactive content triggered by the second user in the at least one interactive content in a distinguishing manner.

According to one or more embodiments of the present disclosure, the second media content further includes the first media content and/or an associated identification of the first media content.

According to one or more embodiments of the present disclosure, the apparatus further comprises:
the presenting module configured to, in response to a triggering operation of the second user for the first media content in the second media content and/or the associated identification of the first media content, skip to present the first media content.

According to one or more embodiments of the present disclosure, the target media content in the target interactive content includes image media content in the target interactive content;
the apparatus further comprises:
the presenting module configured to, in response to a triggering operation of the second user for the target media content in the second media content, locate the image media content and target interactive content associated with the image media content in at least one interactive content associated with the first media content.

According to one or more embodiments of the present disclosure, the apparatus further comprises:
the presenting module configured to, display the target interactive content and the image media content in the at least one interactive content in a distinguishing manner.

According to one or more embodiments of the present disclosure, the apparatus further comprises:
the presenting module configured to, in response to a triggering operation of the second user for the associated interactive content in the second media content, present the first media content, and
a detecting module configured to, detect whether the associated interactive content is associated with upper-level interactive content, if so, display the associated interactive content and the upper-level interactive content, and display the associated interactive content under the upper-level interactive content.

In a fifth aspect, according to one or more embodiments of the present disclosure, there is provided an electronic device, comprising: at least a processor and a memory;
the memory storing computer executable instructions;
the at least one processor executing the computer executable instructions stored by the memory, to cause the at least one processor to perform the content sharing method as described in the first aspect and various possible designs of the first aspect or the second aspect and various possible designs of the second aspect.

In a sixth aspect, according to one or more embodiments of the present disclosure, there is provided a computer readable storage medium having stored thereon computer executable instructions which, when executed by a processor, implement the content sharing method as described in the first aspect and various possible designs of the first aspect or the second aspect and various possible designs of the second aspect.

In a seventh aspect, according to one or more embodiments of the present disclosure, there is provided a computer program product, comprising a computer program which, when executed by a processor, implements the content sharing method as described in the first aspect and various possible designs of the first aspect or the second aspect and various possible designs of the second aspect.

The foregoing description is illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing may be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. A content sharing method, applied to a client of a first user, comprising:
displaying at least one interactive content associated with currently presented first media content in a media content presentation page, wherein, the interactive content is posted by the first user and/or a second user;
in response to a sharing operation triggered by the first user for at least one target interactive content, generating second media content according to the at least one target interactive content and/or associated interactive content, wherein, the target interactive content comprises at least one target media content and/or the associated interactive content comprises at least one interactive content associated with the target interactive content; and
posting the second media content.

2. The method according to claim 1, wherein, the media content presentation page is provided with an Interact control;
the displaying at least one interactive content associated with currently presented first media content in a media content presentation page, comprises:
presenting the first media content in the media content presentation page; and
in response to a triggering operation of the first user for the Interact control, displaying at least one interactive content associated with the first media content.

3. The method according to any of claims 1-2, wherein, the generating second media content according to the at least one target interactive content and/or associated interactive content, comprises:
generating the second media content based on the at least one target interactive content and at least one associated interactive content associated with the at least one target interactive content.

4. The method according to any of claims 1-3, wherein, the in response to a sharing operation triggered by the first user for at least one target interactive content, generating second media content according to the at least one target interactive content and/or associated interactive content, comprises:
in response to a first triggering operation of the first user for any target interactive content, displaying a function list associated with the target interactive content, wherein, the function list comprises a first Share control; and
in response to a triggering operation of the first user for the first Share control, generating the second media content according to target interactive content selected by the user.

5. The method according to any of claims 1-4, wherein, the in response to a sharing operation triggered by the first user for at least one target interactive content, generating second media content according to the at least one target interactive content and/or associated interactive content, comprises:
in response to a second triggering operation of the first user for any interactive content, switching a display state of at least one candidate interactive content associated with the first media content into a selectable state;
in response to a selecting operation triggered by the first user for the at least one candidate interactive content, determining at least one target interactive content and/or associated interactive content selected by the first user;
displaying a preset second Share control; and
in response to a triggering operation of the first user for the second Share control, generating the second media content according to the at least one target interactive content and/or associated interactive content.

6. The method according to any of claims 1-5, wherein, a display area associated with each interactive content includes a preset third Share control;
the in response to a sharing operation triggered by the first user for at least one target interactive content, generating second media content according to the at least one target interactive content and/or associated interactive content, comprises:
in response to a triggering operation of the first user for a third Share control associated with at least one target interactive content and/or associated interactive content, generating the second media content according to the at least one target interactive content and/or associated interactive content.

7. The method according to any of claims 1-6, wherein, the target interactive content further includes interactive information;
the generating the second media content according to the at least one target interactive content and/or associated interactive content, comprises:
combining interactive information corresponding to the at least one target interactive content and at least one target media content and/or associated interactive content in the at least one target interactive content and/or the first media content, according to a display style in a preset first display style template to obtain the second media content.

8. The method according to any of claims 1-7, wherein, the second media content includes interactive information corresponding to the at least one target interactive content and at least one target media content in the at least one target interactive content;
wherein, the interactive information comprises interactive text and/or identification information of a poster corresponding to the interactive text.

9. The method according to any of claims 1-8, wherein, the in response to a sharing operation triggered by the first user for at least one target interactive content, generating second media content according to the at least one target interactive content and/or associated interactive content, comprises:
in response to a sharing operation triggered by the first user for the at least one target interactive content and/or associated interactive content, generating the second media content based on the at least one target interactive content and/or associated interactive content; or
in response to a sharing operation triggered by the first user for the at least one target interactive content and/or associated interactive content, generating the second media content based on the at least one target interactive content and/or associated interactive content and the first media content.

10. The method according to any of claims 1-9, wherein, the in response to a sharing operation triggered by the first user for at least one target interactive content, generating second media content according to the at least one target interactive content and/or associated interactive content, comprises:
in response to the sharing operation triggered by the first user for the at least one target interactive content, displaying a media content editing page, and displaying to-be-edited media content in the media content editing page, wherein the to-be-edited media content comprises the at least one target interactive content or the to-be-edited media content comprises the at least one target interactive content and/or associated interactive content and the first media content; and
in response to a triggering operation of the first user for the to-be-edited media content, editing the to-be-edited media content to obtain the second media content.

11. The method according to claim 10, wherein, the in response to a triggering operation of the first user for the to-be-edited media content, editing the to-be-edited media content to obtain the second media content, comprises:
in response to a first editing operation triggered by the first user for the to-be-edited media content, editing display parameters corresponding to the to-be-edited media content to obtain the second media content;
wherein, the display parameters comprise a display size and/or display position corresponding to interactive information in the at least one target interactive content and at least one target media content and/or associated interactive content in the at least one target interactive content.

12. The method according to claim 10, wherein, the in response to a triggering operation of the first user for the to-be-edited media content, editing the to-be-edited media content to obtain the second media content, comprises:
in response to a second editing operation triggered by the first user for the to-be-edited media content, editing a display style of the to-be-edited media content to obtain the second media content.

13. The method according to claim 12, wherein, the in response to a second editing operation triggered by the first user for the to-be-edited media content, editing a display style of the to-be-edited media content to obtain the second media content, comprises:
in response to the second editing operation triggered by the first user for the to-be-edited media content, determining a second display style template to be switched; and
combining interactive information corresponding to the at least one target interactive content and at least one target media content in the at least one target interactive content and/or the first media content and/or associated interactive content, according to a display style in the second display style template to obtain the second media content.

14. The method according to claim 13, wherein, the in response to the second editing operation triggered by the first user for the to-be-edited media content, determining a second display style template to be switched, comprises:
in response to the second editing operation triggered by the first user for the to-be-edited media content, randomly selecting the second display style template from a plurality of preset display style templates; or
the in response to the second editing operation triggered by the first user for the to-be-edited media content, determining a second display style template to be switched, comprises:
in response to the second editing operation triggered by the first user for the to-be-edited media content, displaying a template list in the media content editing page, wherein the template list comprises a plurality of preset display style templates;
in response to a selecting operation of the first user in the display template list, determining a display style template selected by the first user as the second display style template.

15. The method according to claim 12, wherein, the target media content includes image media content in the target interactive content.

16. A content sharing method, applied to a client of a second user, comprising:
presenting a preset media content stream in a media content presentation page;
presenting second media content posted by a first user in the media content presentation page;
wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

17. The method according to claim 16, wherein, the presenting second media content posted by a first user in the media content presentation page, comprises:
displaying, in the media content presentation page, interactive information in the at least one target interactive content and/or target media content in the at least one target interactive content;
wherein, the target interactive information comprises interactive text and/or identification information of a poster corresponding to the interactive text.

18. The method according to any of claims 16-17, wherein, after the presenting second media content posted by a first user in the media content presentation page, the method further comprises:
in response to a triggering operation of the second user for any target interactive content in the second media content, presenting the first media content, and/or displaying at least one interactive content corresponding to the first media content.

19. The method according to claim 18, wherein, after the displaying at least one interactive content corresponding to the first media content, the method further comprises:
displaying target interactive content triggered by the second user in the at least one interactive content in a distinguishing manner.

20. The method according to any of claims 16-19, wherein, the second media content further comprises the first media content and/or an associated identification of the first media content.

21. The method according to any of claims 16-20, wherein, after the presenting second media content posted by a first user in the media content presentation page, the method further comprises:
in response to a triggering operation of the second user for the first media content in the second media content and/or an associated identification of the first media content, skipping to display the first media content.

22. The method according to any of claims 16-21, wherein, the target media content in the target interactive content comprises image media content in the target interactive content;
after the presenting second media content posted by a first user in the media content presentation page, the method further comprises:
in response to a triggering operation of the second user for the target media content in the second media content, locating the image media content and target interactive content associated with the image media content in at least one interactive content associated with the first media content.

23. The method according to claim 22, wherein, after the locating the image media content and target interactive content associated with the image media content in a plurality of interactive contents associated with the first media content, the method further comprises:
displaying the target interactive content and the image media content in the at least one interactive content in a distinguishing manner.

24. The method according to any of claims 16-23, wherein, after the presenting second media content posted by a first user in the media content presentation page, the method further comprises:
in response to a triggering operation of the second user for the associated interactive content in the second media content, presenting the first media content; and
detecting whether the associated interactive content is associated with upper-level interactive content, if so, displaying the associated interactive content and the upper-level interactive content, and displaying the associated interactive content under the upper-level interactive content.

25. A content sharing apparatus, applied to a client of a first user, comprising:
a display module configured to, display at least one interactive content associated with currently presented first media content in a media content presentation page, wherein, the interactive content is posted by the first user and/or a second user;
a determining module configured to, in response to a sharing operation triggered by the first user for at least one target interactive content, generate second media content according to the at least one target interactive content and/or associated interactive content, wherein, the target interactive content comprises at least one target media content and/or the associated interactive content comprises at least one interactive content associated with the target interactive content; and
a posting module configured to, post the second media content.

26. A content sharing apparatus, applied to a client of a second user, comprising:
a presenting module configured to, present a preset media content stream in a media content presentation page;
a processing module configured to, in response to a switching operation triggered by the second user in the media content presentation page, present second media content posted by a first user in the media content presentation page;
wherein, the second media content is generated by the first user based on at least one target interactive content and/or associated interactive content in the first media content, wherein, the target interactive content comprises at least one target media content and/or the associated interactive content comprises at least one interactive content associated with the target interactive content.

27. An electronic device, comprising: a processor and a memory,
the memory storing computer executable instructions;
the processor executing the computer executable instructions stored by the memory, to cause the processor to perform the content sharing method according to any of claims 1-15 or 16-24.

28. A computer readable storage medium having thereon stored computer executable instructions which, when execute by a processor, implements the content sharing method according to any of claims 1-15 or 16-24.

29. A computer program product, comprising a computer program which, when executed by a processor, implements the content sharing method according to any of claims 1-15 or 16-24.
